# EUROPÄISCHE PATENTANMELDUNG

(11) **EP 4 837 867 A2**
(43) Veröffentlichungstag der Anmeldung: **11.11.2026**
(21) Anmeldenummer: 26174115.1
(22) Anmeldetag: 03.12.2024
(51) Int. Cl.: B65G 69/00

(54) **ABDICHTELEMENT FÜR EINE TORABDICHTUNG EINER VERLADEÖFFNUNG SOWIE TORABDICHTUNG MIT EINEM SOLCHEN ABDICHTELEMENT**

(30) Priorität: 08.12.2023 DE 102023134502; 19.03.2024 DE 102024107856
(62) Dokumentnummer(n) der früheren Anmeldung(en) nach Art. 76 EPÜ: 24217160.1 / 4 566 973
(71) Anmelder: Mengel & Kühlborn Gerätebau GmbH, 37284 Waldkappel (DE)
(72) Erfinder: KAMBERAJ, Edison, 37281 Wanfried (DE)
(74) Vertreter: Walther Bayer Faber Patentanwälte PartGmbB

(57) **Zusammenfassung**

Die vorliegende Erfindung betrifft eine Torabdichtung (10) einer Verladeöffnung (12), welche von einer Wandung (14) gebildet wird, umfassend zumindest ein Abdichtelement (26, 26L, 26R), wobei das Abdichtelement (26, 26L, 26R) einen elastisch verformbaren Schaumstoffkörper (27), der mit einer Kunststoffschicht (34) ummantelt ist, und ein Verbindungselement (30) umfasst, mit welchem das Abdichtelement (26, 26L, 26R) mit einem angrenzenden Bauteil verbunden werden kann, wobei die Torabdichtung (10) zumindest einen elastisch verformbaren Tragkörper (20L, 20R, 200) aufweist, welcher benachbart von der Verladeöffnung (12) mit der Wandung (14) verbunden ist und das Abdichtelement (26, 26L, 26R) unter Verwendung des Verbindungselements (30) mit dem Tragkörper (20L, 20R, 200) verbunden ist.

## Beschreibung

Die vorliegende Erfindung betrifft eine Torabdichtung einer Verladeöffnung mit einem Abdichtelement.

Verladeöffnungen finden sich insbesondere in Lager- und Werkhallen und werden dazu benutzt, Ladegut von einem LKW in die Lager- oder Werkhalle oder umgekehrt zu befördern. Die Verladeöffnungen haben üblicherweise einen rechteckigen Querschnitt sind so angeordnet, dass sich ihre Unterkante in etwa auf der Höhe der Ladefläche des LKW oder des Anhängers des LKW befindet. Die Verladeöffnung ist typischerweise mit einem Tor verschließbar. Um das Ladegut vom LKW in die Lager- oder Werkhalle oder umgekehrt befördern zu können, wird der LKW rückwärts an die Verladeöffnung herangefahren und das Tor geöffnet. Anschließend wird die heckseitige Ladebordwand des LKW oder des Anhängers geöffnet, so dass diese auf der Unterkante der Verladeöffnung aufliegt. Nun kann der LKW oder der Anhänger be- und entladen werden, beispielsweise unter Verwendung von Hubwagen.

Aus verschiedenen Gründen ist es vorteilhaft, Torabdichtungen zu verwenden, welche beispielsweise aus der DE 91 07 819 U1, der US 2013/0031853 A1, der US 4 213 279 A1, der US 4 015 380 A1, der WO 2000/27734 A1, der US 2019/0039841 A1, der EP 1 177 996 A1 oder der DE 10 2022 103 872 A1 bekannt sind. Ein wesentlicher Grund ist, dass aufgrund der beim Be- und Entladen geöffneten Verladeöffnung ein erheblicher Luftaustausch zwischen der Lager- oder Werkhalle und der Umgebung stattfindet. Werden in der Lagerhalle Lebensmittel gelagert, ist die Lagerhalle gekühlt. Insbesondere im Sommer strömt dann warme Luft in die Lagerhalle, so dass die Temperatur in der Lagerhalle steigt und energieaufwändig auf den ursprünglichen Wert gesenkt werden muss. Insbesondere in Werkhallen ist die Temperatur so eingestellt, dass sie für die dort arbeitenden Personen angenehm ist. Insbesondere im Winter jedoch strömt kalte Luft in die Werkhalle, so dass die Temperatur absinkt und energieaufwändig auf den Sollwert angehoben werden muss.

Die Torabdichtungen verringern aufgrund ihrer Abdichtwirkung zwischen der Wandung, welche die Verladeöffnung bildet, und dem LKW oder dem Anhänger den Luftaustausch zwischen der Lager- oder Werkhalle und der Umgebung und sorgen folglich dafür, dass die in der Lager- oder Werkhalle herrschende Temperatur beim Be- und Entladen nur unwesentlich geändert wird. Infolgedessen tragen die Torabdichtungen dazu bei, den Energiebedarf zum Aufrechterhalten der gewünschten Temperatur in der Lager- oder Werkhalle gering zu halten.

Auch wenn bekannte Torabdichtungen, beispielsweise diejenigen, die aus der EP 1 177 996 A1 oder der DE 10 2022 103 872 A1 bekannt sind, gegenüber Verladeöffnungen ohne Torabdichtungen zu einer deutlichen Verringerung des Energiebedarfs zum Aufrechterhalten der gewünschten Temperatur in der Lager- oder Werkhalle führen, gibt es einen Bedarf zu einer weiteren Verbesserung der Abdichtwirkung von Torabdichtungen.

Insofern ist es Aufgabe einer Ausführungsform der vorliegenden Erfindung, eine Torabdichtung einer Verladeöffnung bereitzustellen, mit welcher es auf einfache und kostengünstige Weise möglich ist, eine Abhilfe für die oben genannten Nachteile zu schaffen und insbesondere eine gegenüber bekannten Torabdichtungen erhöhte Abdichtwirkung bereitzustellen.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein Abdichtelement für eine Torabdichtung einer Verladeöffnung, welche von einer Wandung gebildet wird, umfassend
- einen elastisch verformbaren Schaumstoffkörper, der mit einer Kunststoffschicht ummantelt ist, und
- ein Verbindungselement, mit welchem das Abdichtelement mit einem angrenzenden Bauteil verbunden werden kann.

Der Schaumstoffkörper kann dabei säulenförmig ausgestaltet sein und zwischen 2000 und 3000 mm hoch sein und eine hierzu senkrechte Erstreckung von 400 bis 800 mm aufweisen. Das Abdichtelement ist dazu geeignet, in eine Torabdichtung einer Verladeöffnung integriert zu werden. Insbesondere kann das Abdichtelement auch in bereits bestehende Torabdichtungen eingebaut werden, so dass eine Nachrüstung möglich ist. Der Schaumstoffkörper hat eine isolierende Wirkung und dichtet die Torabdichtung beim Be- und Entladen eines LKW oder Anhängers gegenüber der Umgebung ab, so dass der oben beschriebene Luftaustausch zwischen der Lager- oder Werkhalle und der Umgebung eingeschränkt wird, infolgedessen der Energiebedarf zur Temperierung der Lager- oder Werkhalle verringert wird. Die Ummantelung dient zum Schutz des Schaumstoffkörpers gegen äußere Einflüsse, beispielsweise gegen Witterungseinflüsse. Zudem kann das Abdichtelement so in die Torabdichtung eingebaut werden, dass es sich an den LKW oder den Anhänger anlegt, wobei sich der Schaumstoffkörper verformt und sich der äußeren Form des LKW oder des Anhängers anpassen kann. Infolgedessen wird ein spaltfreier oder annähernd spaltfreier Kontakt zwischen dem Abdichtelement und der Außenhaut des LKW oder des Anhängers hergestellt. Aufgrund der Verformbarkeit wird der spaltfreie oder annähernd spaltfreie Kontakt zumindest in bestimmten Grenzen auch dann bereitgestellt, wenn die Position des LKW oder des Anhängers in Bezug auf die Torabdichtung variiert. Zwar sind die LKW-Fahrer bestrebt, den LKW oder den Anhänger in einer Sollposition in Bezug auf die Torabdichtung zu parken, welche aber nur selten erreicht wird. Aufgrund der Anordnung innerhalb der Torabdichtung und der Dimensionierung des Abdichtelements ist der spaltfreie oder nahezu spaltfreie Kontakt zumindest in gewissen Grenzen nicht abhängig davon, ob der LKW oder der Anhänger in der Sollposition parkt oder nicht. Zudem ist der spaltfreie oder nahezu spaltfreie Kontakt auch dann erreichbar, wenn LKW oder Anhänger mit unterschiedlichen Abmessungen an die Torabdichtung herangefahren werden.

Die Verformbarkeit wird vom Schaumstoffkörper bereitgestellt. Es sind keine mechanischen Bauteile wie Scheren oder dergleichen notwendig, wodurch die Konstruktion einfach und zuverlässig ist.

Im Abdichtelement ist ein Verbindungselement integriert. Das Verbindungselement kann plattenförmig ausgebildet sein und flächig auf dem Schaumstoffkörper aufliegen. Es können auch mehrere Verbindungselemente vorgesehen sein. Die Verbindungselemente weisen eine im Vergleich zum Schaumstoffkörper geringere Verformbarkeit auf und sind vorzugsweise starr. Aufgrund der Verformbarkeit des Schaumstoffkörpers lässt sich dieser schlecht an benachbart angeordnete Bauteile befestigen. Mithilfe des Verbindungselements kann eine ausreichend stabile Verbindung zu angrenzend angeordneten Bauteilen insbesondere der Torabdichtung geschaffen werden. Es soll aber an dieser Stelle darauf hingewiesen werden, dass das Verbindungselement allein nicht zwingend geeignet sein muss, das Abdichtelement mit einem angrenzenden Bauteil zu befestigen, sondern das Verbindungselement kann an der betreffenden Verbindung und insbesondere auch an der Befestigung unterstützend beteiligt sein. Insofern kann der Begriff "Verbindungselement" auch als "Verbindungsabschnitt" bezeichnet werden. Dabei kann das Verbindungselement innerhalb der Kunststoffschicht angeordnet sein, wodurch auch das Verbindungselement von der Kunststoffschicht geschützt wird.

Nach Maßgabe einer weiteren Ausführungsform kann das Verbindungselement eine Holzplatte, insbesondere aus Pappelholz, umfassen. Die Holzplatte kann mit dem Schaumstoffkörper verklebt sein und trägt zu einer Versteifung des Schaumstoffkörpers dort bei, wo dieser mit angrenzenden Bauteilen verbunden werden soll. Zwar könnten auch Metallplatten, beispielsweise Aluminiumplatten, oder Kunststoffplatten verwendet werden, allerdings ist Holz ein regenerativer Werkstoff und günstig zu erhalten. Zudem kann insbesondere dann, wenn als Holz Pappelholz gewählt wird, das Gewicht des Abdichtelements gering gehalten werden. Die Holzplatte muss sich nicht über den gesamten Schaumstoffkörper erstrecken. Vielmehr können mehrere Holzplatten vorgesehen sein, welche nur dort angeordnet sind, wo eine Verbindung zwischen dem Abdichtelement und dem angrenzenden Bauteil geschaffen werden soll.

In einer weitergebildeten Ausführungsform kann der Schaumstoffkörper zumindest einen Hohlraum umfassen. Der Hohlraum kann den gesamten Schaumstoffkörper durchlaufen. Insofern kann der Hohlraum auch als eine Hohlkammer aufgefasst werden, welche nach außen hin offen ist. Auch hierdurch kann das Gewicht des Abdichtkörpers gering gehalten werden. Zudem wird das Volumen an Schaumstoff gegenüber einer hohlraumfreien oder massiven Ausführung verringert, ohne dass die isolierende Wirkung des Schaumstoffkörpers nennenswert verringert wird. Darüber hinaus kann mit Anordnung und Größe des Hohlraums die Verformbarkeit des Schaumstoffkörpers gezielt eingestellt werden. So kann beispielsweise dort, wo der Schaumstoffkörper üblicherweise in wechselwirkenden Kontakt mit der Außenhaut des LKW oder des Anhängers tritt, mit einer entsprechenden Anordnung und Dimensionierung des Hohlraums eine erhöhte Verformbarkeit bereitgestellt werden. Die Außenhaut des LKW oder des Anhängers weist typischerweise Vorsprünge und Vertiefungen auf. Wie erwähnt, wird der LKW oder der Anhänger rückwärts an die Verladeöffnung herangefahren. Dabei wird der Schaumstoffkörper von demjenigen Vorsprung am stärksten verformt und insbesondere gestaucht, der am weitesten nach außen vorsteht. Dann verbleibt aber ein Spalt zu den Abschnitten der Außenhaut, die weniger weit nach außen vorstehen. Aufgrund der Hohlräume kann sich der Schaumstoff aber schnell wieder ausdehnen, so dass dann wieder ein spaltfreier oder annähernd spaltfreier Kontakt zwischen der Außenhaut und dem Abdichtelement entsteht. Dadurch, dass der Hohlraum nach außen offen ist, kann die Luft beim Komprimieren gut entweichen, ohne dass der übrige Schaumstoffkörper gedehnt wird.

Gemäß einer weiteren Ausführungsform weist die Kunststoffschicht insbesondere fluchtend zu dem Hohlraum angeordnete Öffnungen auf. Diese Öffnungen begünstigen das Ausströmen und das Einströmen von Luft aus dem bzw. in den Hohlraum. Die übrige Kunststoffschicht kann dann luftdicht ausgeführt sein. Sind die Öffnungen fluchtend zu dem Hohlraum angeordnet, können die Öffnungen und der Hohlraum dazu genutzt werden, um ein Seil durch das Abdichtelement zu führen. Mit dem Seil kann das Abdichtelement an der Torabdichtung befestigt werden. Zumindest aber kann das Seil dazu verwendet werden, um das Abdichtelement in eine gewisse Position vorzuspannen, beispielsweise dann, wenn ein elastisches Seil verwendet wird.

Bei einer weitergebildeten Ausführungsform kann das Abdichtelement einen im Wesentlichen rechteckigen Querschnitt mit einer Schrägfläche oder einer Wölbung aufweisen. Das Abdichtelement kann so in die Torabdichtung eingebaut werden, dass das Abdichtelement im Bereich der Schrägfläche oder der Wölbung zuerst mit dem an die Torabdichtung heranfahrenden LKW oder Anhänger in Wechselwirkung tritt. Die Schrägfläche oder die Wölbung hat insofern eine gewisse Führungsfunktion und begünstigt die Verformung, um einen spaltfreien oder nahezu spaltfreien Kontakt zwischen dem Abdichtelement und dem LKW oder dem Anhänger auch bei unterschiedlicher Position in Bezug auf die Verladeöffnung und Größe des LKWs oder des Anhängers bereitzustellen. Die Schrägfläche oder die Wölbung sind gegenüberliegend dem Verbindungselement angeordnet.

Gemäß einer weiteren Ausführungsform kann das Abdichtelement eine zumindest Kopplungseinrichtung aufweisen, mit welchem ein Abdichtelement mit einem weiteren Abdichtelement verbindbar ist. Die Verbindung kann lösbar sein. Denkbar ist eine formschlüssige Verbindung, bei welchem ein Kopplungsvorsprung nach Art eines Puzzles in eine komplementär ausgebildeten Kopplungsausnehmung eingreift. Eine hakenförmige Gestaltung der Kopplungseinrichtung ist auch denkbar. Zudem könnten Rastelemente und/oder Magnete zum Verbinden von zwei Abdichtelementen verwendet werden. Wie eingangs erwähnt, können die Abdichtelemente bis zu 3000 mm hoch sein. Hierdurch werden insbesondere der Transport, die Handhabung und die Montage erschwert. In dieser Ausführungsform jedoch können beispielsweise drei Abdichtelemente mit einer Länge von 1000 mm so miteinander verbunden werden, dass sie gemeinsam eine Höhe von 3000 mm erreichen. Hierdurch werden der Transport, die Handhabung und die Montage vereinfacht.

Es hat sich herausgestellt, dass die Abdichtelemente im Bereich des unteren Endes einem erhöhten Verschleiß ausgesetzt sind als in der Mitte oder im Bereich des oberen Endes. Dies kann beispielsweise von Bauteilen des Fahrgestells des LKW oder des Anhängers herrühren. In diesem Fall kann das untere Abdichtelement relativ rasch ausgetaucht werden, ohne dass das gesamte, 3000 mm hohe Abdichtelement getauscht werden muss.

Die Abdichtelemente müssen nicht gleich lang sein. Man kann beispielsweise drei Längen vorsehen, so dass man modulartig die Gesamtlänge der miteinander gekoppelten Abdichtelemente variieren kann, um auf spezielle Anforderungen hinsichtlich der Dimensionierung der Abdichtelemente flexibel reagieren zu können. Zudem können die Hohlräume dimensioniert und der verwendete Schaumstoffkörper unterschiedlich elastisch sein. Wie erwähnt, ist der Verschleiß am unteren Ende eines Abdichtelements besonders hoch. Das dort angeordnete Abdichtelement kann beispielsweise eine besonders hohe Elastizität aufweisen. Auch kann dort die Kunststoffschicht besonders abriebfest gewählt sein.

Eine Ausbildung der Erfindung betrifft eine Torabdichtung einer Verladeöffnung, welche von einer Wandung gebildet wird, umfassend zumindest ein Abdichtelement nach einem der vorherigen Ausführungsformen oder einen elastisch verformbaren Schaumstoffkörper. Die technischen Effekte und Vorteile, die sich mit der vorschlagsgemäßen Torabdichtung erreichen lassen, entsprechen im Wesentlichen denjenigen, die für das vorliegende Abdichtelement erörtert worden sind. Zusammenfassend sei darauf hingewiesen, dass es mit dem Abdichtelement möglich ist, eine spaltfreie oder nahezu spaltfreie Abdichtung zwischen dem Abdichtelement und dem LKW oder dem Anhänger zu erreichen, der in die Torabdichtung eingebracht ist. Der Energiebedarf zur Temperierung der Lager- oder Werkhalle kann infolgedessen im Vergleich zu aus dem Stand der Technik bekannten Torabdichtungen verringert werden. Zudem sind keine mechanischen Elemente wie Scheren oder dergleichen notwendig, um vom LKW oder vom Anhänger auf die Torabdichtung aufgebrachte Kräfte aufzunehmen. Vielmehr werden derartige Kräfte vom Abdichtelement aufgenommen und bewirken eine Verformung desselben. Der konstruktive Aufwand wird verringert und die Zuverlässigkeit der Torabdichtung erhöht.

Es soll an dieser Stelle darauf hingewiesen werden, dass die zuvor beschriebenen technischen Effekte auch mit dem Schaumstoffkörper als solchem, also ohne die Kunststoffschicht und ohne das Verbindungselement, erreicht werden können. Die Befestigung an der Torabdichtung könnte mit Gurten oder dergleichen erreicht werden, ohne dass ein gesondertes Verbindungselement benötigt wird.

Bei einer weiteren Ausbildung kann vorgesehen sein, dass die Torabdichtung zumindest einen elastisch verformbaren Tragkörper aufweist, welcher benachbart von der Verladeöffnung mit der Wandung verbindbar oder verbunden ist, wobei das Abdichtelement unter Verwendung des Verbindungselements mit dem Tragkörper verbindbar oder verbunden ist. Derartige Tragkörper sind aus der EP 1 177 996 A1 oder der DE 10 2022 103 872 A1 bekannt und stellen daher keine zusätzlichen Bauteile einer Torabdichtung dar, um den erfindungsgemäßen Effekt zu erreichen. Der in der EP 1 177 996 A1 offenbarte Tragkörper ist aus einem mit Fasern verstärktem Gummi und/oder Kunststoff gebildeten Verbundmaterial hergestellt, wobei das Verbundmaterial sandwichartig aufgebaut ist und sich mindestens zwei die Gewebeschichten mit mindestens einer Gummi- und/oder Kunststoffschicht abwechseln. Der in der DE 10 2022 103 872 A1 offenbarte Tragkörper ist zumindest teilweise aus einem Verbundmaterial umfassend mindestens eine Gewebeschicht und eine die Gewebeschicht verstärkende Gummischicht gebildet. Die Gewebeschicht ist aus einem Schussfaden aus Polyamid und einem Kettfaden aus einem anderen Material gebildet, wobei der Schussfaden als Monofilament, insbesondere als Polyamidmonofilament, ausgebildet ist.

Diese Tragkörper werden nun zum Befestigen des Abdichtelements innerhalb der Torabdichtung verwendet. Folglich sind keine zusätzlichen Befestigungselemente notwendig. Zudem sind derartige Tragkörper ebenfalls elastisch verformbar. Infolgedessen kann sich das Abdichtelement zusammen mit dem Tragkörper wegbewegen, wenn die vom LKW oder dem Anhänger aufgebrachte Kraft zu groß wird und das Abdichtelement irreversibel verformt werden könnte. Insofern sorgt das Tragelement zusätzlich für einen Schutz vor Beschädigungen für das Abdichtelement. Dabei können die Verformbarkeiten des Tragkörpers und des Abdichtelements so aufeinander abgestimmt werden, dass zunächst das Abdichtelement verformt wird und erst ab einem bestimmten Verformungsgrad der Tragkörper verformt wird.

Eine fortentwickelte Ausbildung kann vorgeben, dass die Torabdichtung zumindest eine am der Wandung abgewandten Ende angeordnete, elastisch verformbare Schürze aufweist. Derartige Schürzen sind ebenfalls Teil von bekannten Torabdeckungen und dienen primär dazu, die Torabdeckung vor Schmutz und Witterungseinflüssen zu schützen. Bei der vorliegenden Torabdichtung kann die Schürze so in Bezug auf das Abdichtelement angeordnet werden, dass zuerst die Schürze mit dem LKW oder dem Anhänger in Berührung kommt und von diesem zum Abdichtelement hin bewegt wird. Infolgedessen ist die Schürze zwischen dem Abdichtelement und dem LKW oder dem Anhänger angeordnet, so dass das Abdichtelement vor Beschädigungen geschützt wird. LKW oder Anhänger können scharfe Kanten aufweisen, welche die Kunststoffschicht des Abdichtelements beschädigen könnten. Die Schürzen können so ausgestaltet sein, dass scharfe Kanten zu keinen nennenswerten Beschädigungen an den Schürzen führen.

Nach Maßgabe einer fortentwickelten Ausbildung kann die Torabdichtung einen Rahmen aufweisen, welcher am der Wandung abgewandten Ende des Tragkörpers mit diesem verbunden ist und an welchem die Schürze befestigt ist. Mit dem Rahmen kann eine Befestigungsmöglichkeit für die Schürze geschaffen werden, so dass diese um eine vom Rahmen vorgegebene Verformungsachse verformt werden kann. Hierdurch kann die Art und Weise der Verformung der Schürze eingestellt werden. Die Schürze kann sich dabei nach Art einer Tür verformen und sich dann ab einem bestimmten Drehwinkel am Abdichtelement anlegen.

Nach Maßgabe einer fortentwickelten Ausbildung kann
- das Abdichtelement derart am Tragkörper verbunden sein, dass die Schrägfläche oder die Wölbung zum Zentrum der Torabdichtung zeigt und benachbart zum Rahmen angeordnet ist, wobei
- die Schürze infolge der elastischen Verformung mit dem Abdichtelement und insbesondere mit der Schrägfläche oder die Wölbung in Kontakt treten kann.

In dieser Ausbildung ist das Abdichtelement so in die Torabdichtung eingebaut, dass das Abdichtelement im Bereich der Schrägfläche oder der Wölbung zuerst mit dem an die Torabdichtung heranfahrenden LKW oder Anhänger in Wechselwirkung tritt, wobei zwischen dem LKW oder dem Anhänger die Schürze angeordnet ist. Die Schrägfläche oder die Wölbung hat insofern eine gewisse Führungsfunktion und begünstigt die Verformung, um einen spaltfreien oder nahezu spaltfreien Kontakt zwischen dem Abdichtelement und dem LKW oder dem Anhänger auch bei unterschiedlicher Position und Größe des LKWs oder des Anhängers bereitzustellen. Insofern ist die Formulierung "zum Zentrum hinweisend" so zu verstehen, dass die Schrägfläche nicht nach außen weist, sondern zur Verladeöffnung hin eine Verringerung des Abstands zwischen den seitlichen Abdichtelementen bewirkt.

Eine weitere Ausbildung gibt vor, dass die Torabdichtung
- zwei vertikal verlaufende Rahmen und
- einen oberen Rahmen umfasst, der horizontal verläuft und die zwei vertikal verlaufenden Rahmen miteinander verbindet.

Die drei Rahmen sind in dieser Ausbildung U-förmig angeordnet. Dabei sind die vertikal verlaufenden Rahmen seitlich angeordnet und mit dem oben verlaufenden horizontalen Rahmen verbunden. Hierdurch erhält die Torabdichtung eine gewisse Verwindungssteifigkeit.

Beispielhafte Ausführungsformen der Erfindung werden im Folgenden unter Bezugnahme auf die beigefügten Zeichnungen näher erläutert. Es zeigen
- Figur 1A: eine perspektivische Darstellung einer ersten Ausführungsform einer Torabdichtung ohne die Abdichtelemente,
- Figur 1B: die in Figur 1A dargestellte Torabdichtung mit zwei erfindungsgemäßen Abdichtelementen,
- Figur 2A: eine erste Seitenansicht eines erfindungsgemäßen Abdichtelements,
- Figur 2B: eine zweite Seitenansicht des in Figur 2A dargestellten Abdichtelements,
- Figur 2C: eine Schnittdarstellung des Abdichtelements entlang der in Figur 2A definierten Schnittebene,
- Figur 3A: eine Vorderansicht einer zweiten Ausführungsform der Torabdichtung,
- Figur 3B: eine Seitenansicht der in Figur 3A gezeigten Torabdichtung,
- Figur 3C: eine Draufsicht auf die in Figur 3A gezeigte Torabdichtung,
- Figur 3D: eine Schnittdarstellung durch ein oberes Abdichtelement, und
- Figur 4: eine Seitenansicht von drei erfindungsgemäßen Abdichtelementen.

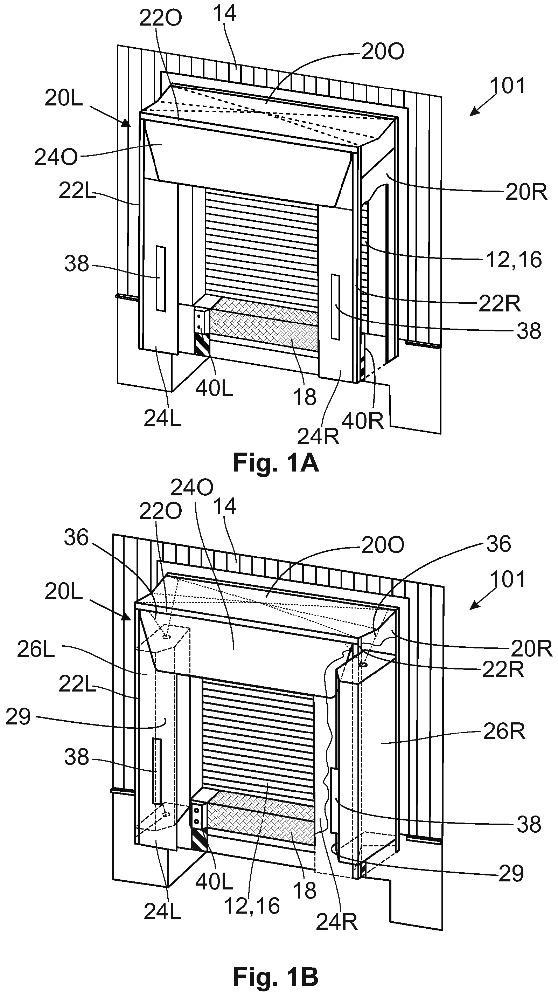

In Figur 1A ist eine Torabdichtung 101 gemäß einer ersten Ausführungsform einer Verladeöffnung 12 anhand einer perspektivischen Darstellung gezeigt. Die Verladeöffnung 12 wird von einer Wandung 14 insbesondere einer nicht näher dargestellten Lager- oder Werkhalle gebildet und ist in Figur 1A mit einem rollladenartigen Tor 16 verschlossen. Man erkennt, dass die Unterkante der Verladeöffnung 12 mittels eines Blechs 18 ausgelegt ist. Zudem ist erkennbar, dass die Unterkante der Verladeöffnung 12 nicht bündig mit dem befahrbaren Boden vor derselben abschließt, sondern beabstandet hierzu.

Die Torabdichtung 101 weist einen linken Tragkörper 20L, einen rechten Tragkörper 20R sowie eine oberen Tragkörper 200 auf, welche mit einer hier nicht näher gezeigten Tragkonstruktion an der Wandung 14 befestigt sind. Am der Wandung 14 abgewandtem Ende umfasst die Torabdichtung 101 insgesamt drei Rahmen 22, von denen zwei Rahmen 22 vertikal verlaufen. Ein linker Rahmen 22L ist mit dem linken Tragkörper 20L und ein rechter Rahmen 22R mit dem rechten Tragkörper 20R verbunden. Ein horizontal verlaufender oberer Rahmen 220 ist mit dem oberen Tragkörper 200 verbunden. Am linken Rahmen 22L sind eine linke Schürze 24L, am rechten Rahmen 22R eine rechte Schürze 24R und am oberen Rahmen 220 eine obere Schürze 240 befestigt. Soweit entspricht die Torabdichtung 101 beispielsweise derjenigen, wie sie in der EP 1 177 996 A1 oder der DE 10 2022 103 872 A1 beschrieben ist.

In Figur 1B ist die Torabdichtung 101 mit einem erfindungsgemäßen linken Abdichtelement 26L und einem erfindungsgemäßen rechten Abdichtelement 26R versehen, die im Wesentlichen vertikal verlaufen. Das linke Abdichtelement 26L und das rechte Abdichtelement 26R sind identisch aufgebaut, nur anders orientiert in der Torabdichtung 101 montiert.

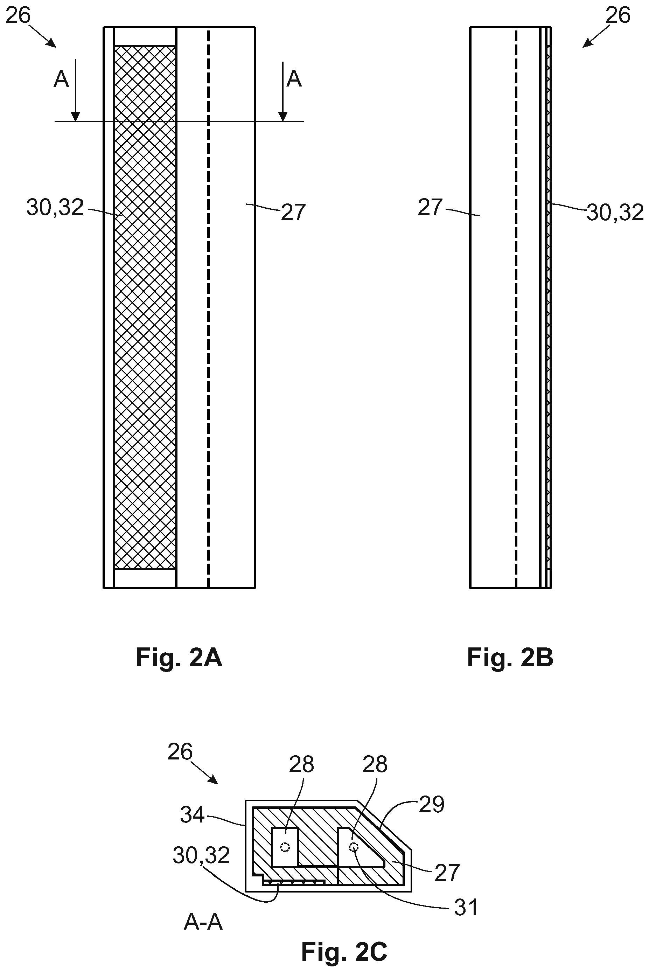

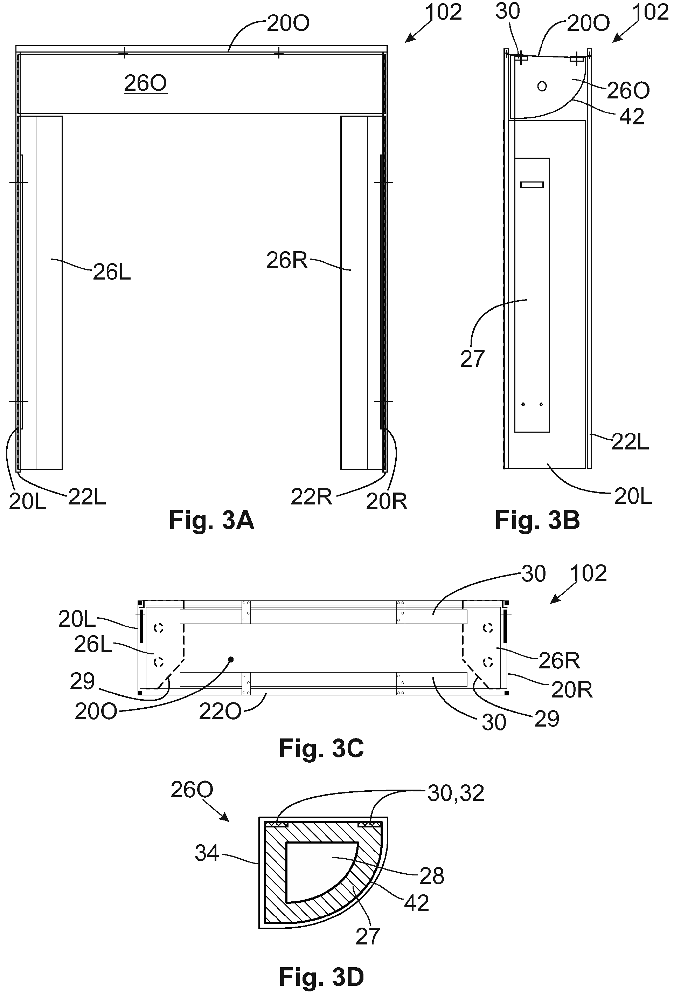

Prinzipiell wäre es möglich, die Torabdichtung 101 auch mit einem oberen und einem unteren Abdichtelement 26 zu versehen, welche im Wesentlichen horizontal verlaufen (nicht dargestellt, siehe aber Figuren 3A bis 3D). Eines der Abdeckelemente 26 ist in den Figuren 2A bis 2C separat dargestellt. Das Abdichtelement 26 umfasst einen säulenförmigen Schaumstoffkörper 27, welcher einen im Wesentlichen rechteckigen Querschnitt aufweist, aber eine Schrägfläche 29 bildet, die im dargestellten Beispiel einen Winkel von ca. 45° mit den angrenzenden Flächen einschließt, was aus Figur 2C gut hervorgeht. Der Winkel kann aber auch anders gewählt sein. Ferner ist aus der Figur 2C erkennbar, dass der Schaumstoffkörper 27 nicht massiv aufgebaut ist, sondern zwei Hohlräume 28 aufweist. Der in Bezug auf Figur 2C rechte Hohlraum 28 ist an die Schrägfläche 29 angepasst, so dass sich insgesamt eine relativ gleichmäßige Wandstärke ergibt.

Ferner ist das Abdichtelement 26 mit einem Verbindungselement 30 versehen, welches als Holzplatte 32 ausgeführt ist. Das Verbindungselement 30 ist seitlich mit dem Schaumstoffkörper 27 beispielsweise durch Kleben verbunden und ist so angeordnet und dimensioniert, dass es nicht über den Schaumstoffkörper 27 übersteht, sondern bündig mit diesem abschließt.

Nur aus Figur 2C ist erkennbar, dass das Abdichtelement 26 mit einer Kunststoffschicht 34 ummantelt ist. Die Kunststoffschicht 34 kann aus PVC (Polyvinylchlorid) bestehen oder dieses umfassen. Zudem sind in Figur 2C Öffnungen in der Kunststoffschicht 34 erkennbar, welche fluchtend zu den Hohlräumen 28 angeordnet sind. Wird das Abdichtelement 26 komprimiert, so kann die Luft weitgehend widerstandsfrei aus den Hohlräumen 28 entweichen, ohne dass die Kunststoffschicht 34 expandiert.

Bezugnehmend auf Figur 1B ist erkennbar, dass das linke Abdichtelement 26L am linken Tragkörper 20L und das rechte Abdichtelement 26R am rechten Tragkörper 20R jeweils im Bereich der Holzplatte 32 befestigt ist. Die verwendeten Befestigungselemente sind nicht dargestellt. Zudem sind das linke Abdichtelement 26L und das rechte Abdichtelement 26R am oberen Ende mit jeweils einem Seil 36 an der Wandung 14 und am linken Rahmen 22L bzw. rechten Rahmen 22R befestigt.

Die Torabdichtung 101 wird auf folgende Weise betrieben: Bezugnehmend auf die Figur 1B fährt ein LKW mit seinem Heck auf die Verladeöffnung 12 zu. Sofern der LKW einen Anhänger zieht, fährt der LKW mit dem Heck des Anhängers auf die Verladeöffnung 12 zu (nicht dargestellt). Die linke Schürze 24L und die rechte Schürze 24R weisen jeweils einen Markierungsstreifen 38 auf, welche dem Fahrer bei der Orientierung helfen. Das Heck des LKW bzw. des Anhängers kontaktiert zunächst die linke Schürze 24L und die rechte Schürze 24R, welche infolgedessen nach Art einer Tür um den linken Rahmen 22L bzw. rechten Rahmen 22R gedreht werden, bis dass sie an der Schrägfläche 29 des linken Abdichtelements 26L bzw. des rechten Abdichtelements 26R zur Anlage kommen. Aus den Figuren 1A und 1B ist erkennbar, dass im Bereich der Unterkante der Verladeöffnung 12 ein linker Puffer 40L und ein rechter Puffer 40R an der Wandung 14 befestigt sind. Der LKW oder der Anhänger können so weit an die Verladeöffnung 12 herangefahren werden, bis dass das Heck zumindest mit einem der Puffer 40L, 40R in Berührung kommt. Infolge dieser Bewegung werden nicht nur die linke Schürze 24L und die rechte Schürze 24R gegen die Schrägfläche 29 des linken Abdichtelements 26L bzw. des rechten Abdichtelements 26R gedrückt, sondern der LKW bzw. der Anhänger verformt das linke Abdichtelement 26L und das rechte Abdichtelement 26R. Es kommt zu einem spaltfreien oder annähernd spaltfreien Kontakt zwischen dem Abdichtelement 26L, 26R und der Außenhaut des LKW oder des Anhängers, wobei die linke Schürze 24L und die rechte Schürze 24R dazwischen angeordnet ist. Hierdurch wird ein Luftaustausch verhindert oder zumindest sehr gering gehalten werden.

Insbesondere dann, wenn ein besonders breiter LKW oder Anhänger zur Verladeöffnung 12 gefahren wird und/oder wenn der LKW oder der Anhänger nicht mittig in Bezug auf die Verladeöffnung 12 positioniert sind, kann es zu einer sehr starken Verformung des linken Abdichtelements 26L und/oder des rechten Abdichtelements 26R kommen. Ab einem bestimmten Verformungsgrad werden auch der linke Tragkörper 20L und/oder der rechte Tragkörper 20R elastisch verformt, so dass das linke Abdichtelement 26L und/oder das rechte Abdichtelement 26R insbesondere etwas zur Seite ausweichen kann. Hierdurch wird eine zu starke Verformung des linken Abdichtelements 26L und/oder des rechten Abdichtelements 26R verhindert, die zu einer Beschädigung derselben führen könnte.

Wie erwähnt, weist die Torabdichtung 101 auch die obere Schürze 240 auf. Ein oberes Abdichtelement weist die Torabdichtung 101 aber nicht auf, was prinzipiell aber möglich wäre (siehe aber Figuren 3A bis 3D). Im dargestellten Ausführungsbeispiel wird die obere Schürze 240 vom Heck des LKW oder des Anhängers zur Verladeöffnung 12 hin bewegt, ohne aber in Kontakt mit dem linken Abdichtelement 26L und/oder dem rechten Abdichtelement 26R oder nur in einen kleinflächigen Kontakt zu treten.

Ist der LKW bzw. der Anhänger so positioniert, dass dieser am linken Puffer 40L und/oder am rechten Puffer 40R anliegt, kann das Tor 16 geöffnet und die Ladebordwand ausgeklappt werden. Der LKW bzw. der Anhänger kann nun be- und entladen werden. Ist der Be- und/oder Entladevorgang abgeschlossen, wird die Ladebordwand geschlossen und der LKW bzw. der Anhänger aus der Torabdichtung 101 entfernt. Insbesondere dann, wenn das linke Abdichtelement 26L und/oder das rechte Abdichtelement 26R stark verformt worden sind und nach links und rechts ausgewichten sind, werden diese vom linken Tragkörper 20L und vom rechten Tragkörper 20R wieder in die Ausgangsposition gestellt, wenn der LKW bzw. der Anhänger aus der Torabdichtung 101 entfernt worden ist. Wie erwähnt, sind das linke Abdichtelement 26L und das rechte Abdichtelement 26R am oberen Ende mit jeweils einem Seil 36 an der Wandung 14 und am linken Rahmen 22L bzw. rechten Rahmen 22R befestigt. Diese Seile 36 können nach Art eines Expanders ausgeführt sein und tragen dazu bei, das linke Abdichtelement 26L und das rechte Abdichtelement 26R und folglich auch den linken Tragkörper 20L und den rechten Tragkörper 20R wieder in die Ausgangsposition zu stellen.

Wie erwähnt, weisen die Abdichtelemente 26 Hohlräume 28 auf, die beim Einfahren des LKW oder des Anhängers in die Torabdichtung 101 komprimiert werden. Die darin enthaltene Luft kann durch die Öffnungen 31 der Kunststoffschicht 34 entweichen. Wenn der LKW oder der Anhänger seine finale Parkposition in der Torabdichtung 101 erreicht hat, kann sich die Torabdichtung 101 wieder ausdehnen, um beim Einfahren in die Torabdichtung 101 entstandene Spalte zwischen dem Abdichtelement 26 und dem LKW oder dem Anhänger zu schließen.

In den Figuren 3A bis 3C ist eine zweite Ausführungsform einer Torabdichtung 102 anhand einer Vorderansicht (Figur 3A), einer Seitenansicht (Figur 3B) und einer Draufsicht (Figur 3C) dargestellt. Aus Darstellungsgründen sind die Schürzen 24L, 24R, 240 nicht gezeigt (vgl. hierzu Figuren 1A und 1B). Bezogen auf die Figur 3B schließt sich die nicht dargestellte Verladeöffnung 12 links der Torabdichtung 102 an. Der prinzipielle Aufbau der Torabdichtung 102 nach der zweiten Ausführungsform entspricht dabei demjenigen der Torabdichtung 101 nach der ersten Ausführungsform, so dass im Folgenden nur auf die wesentlichen Unterschiede eingegangen wird.

Wie auch bei der ersten Ausführungsform weist die Torabdichtung 102 nach der zweiten Ausführungsform ein erfindungsgemäßes linkes Abdichtelement 26L und ein erfindungsgemäßes rechtes Abdichtelement 26R auf, welche unter Verwendung des linken Tragkörpers 20L bzw. des rechten Tragkörpers 20R auf die beschriebene Weise am linken Rahmen 22L bzw. am rechten Rahmen 22R befestigt sind. Am oberen Tragkörper 200 ist ein oberes Abdichtelement 260 befestigt, wobei die Befestigung auf prinzipiell dieselbe Weise erfolgt wie beim linken Tragkörper 20L und dem rechten Tragkörper 20R.

Eine prinzipielle Schnittdarstellung durch das obere Abdichtelement 260 ist in Figur 3D gezeigt. Im Vergleich zu dem in Figur 2C dargestellten Abdichtelement 26 weist das obere Abdichtelement 260 in etwa die Form eines Viertelkreises auf und bildet eine Wölbung 42. Im Übrigen ist das obere Abdichtelement 260 im Wesentlichen so aufgebaut wie das linke Abdichtelement 26L oder das rechte Abdichtelement 26R. Das obere Abdichtelement 260 ist mit dem Verbindungselement 30 am oberen Tragkörper 200 derart befestigt, dass die Wölbung 42 von der Verladeöffnung 12 weg zeigt. Wenn der LKW oder der Anhänger auf die beschriebene Weise rückwärts an die Verladeöffnung 12 herangefahren wird, tritt die Außenhaut des LKW oder des Anhängers mit der Wölbung 42 des oberen Abdichtelements 260 in Kontakt. Der Hohlraum 28 des oberen Abdichtelements 260, 26L, 26R erhöht die Verformbarkeit desselben. Wie insbesondere aus der Figur 3A hervorgeht, erstreckt sich das obere Abdichtelement 260 über die gesamte Breite der Torabdichtung 102, während das linke Abdichtelement 26L und das rechte Abdichtelement 26R von unten nahezu spaltfrei an das obere Abdichtelement 260 heranreichen. Bei den Schürzen 24L, 24R, 240 verhält es sich ähnlich (siehe Figuren 1A und 1B), insbesondere, um ein gegenseitiges Verklemmen zu verhindern.

Infolgedessen kann mit der Torabdichtung 102 nach dem zweiten Ausführungsbeispiel der LKW oder der Anhänger zu den Seiten und nach oben gegenüber der Umgebung spaltfrei oder nahezu spaltfrei abdichten.

Zwar ist es prinzipiell möglich, das obere Abdichtelement 260 so zu gestalten, dass es denselben Aufbau aufweist wie das linke Abdichtelement 26L oder das rechte Abdichtelement 26R. Allerdings kann der abweichende Aufbau des oberen Abdichtelements 260 aus folgenden Gründen sinnvoll sein: Wie erwähnt, werden die Abdichtelemente 260, 26L, 26R unter Verwendung des Verbindungselements 30 an den Tragkörpern 20L, 20R, 200 befestigt. Während die Tragkörper 20L, 20R, an denen das linke Abdichtelement 26L und das rechte Abdichtelement 26R befestigt sind, im Wesentlichen vertikal verlaufen und von dem linken Abdichtelement 26L und dem rechten Abdichtelement 26R weitgehend auf Zug belastet werden, verläuft der Tragkörper 200, an welchem das obere Abdichtelement 260 befestigt ist, horizontal. Infolgedessen wird der Tragkörper 200 auch auf Biegung belastet, was eine insgesamt ungünstigere Belastung für den Tragkörper 200 im Vergleich zu den vertikal verlaufenden Tragkörpern 20L, 20R darstellt. Daher muss der horizontal verlaufende Tragkörper 200 etwas stabiler und folglich steifer ausgebildet werden als die vertikal verlaufenden Tragkörper 20L, 20R. Hierdurch wird der Außenhaut des LKW oder des Anhängers am oberen Abdichtelement 260, 26L, 26R ein erhöhter Widerstand entgegengesetzt, so dass dort eine erhöhte Reibung wirkt, die zu einem höheren Verschleiß führen kann. Daher kann der Querschnitt des oberen Abdichtelements 260 so aufgebaut sein, dass trotz des steiferen horizontal verlaufenden Tragkörpers 200 dennoch eine ausreichend große Verformbarkeit bereitgestellt wird. Wie aus der Figur 3D hervorgeht, kann dies insbesondere mit einem im Vergleich zum in Figur 2C gezeigten Abdichtelement 26 größeren Hohlraum 28 erreicht werden.

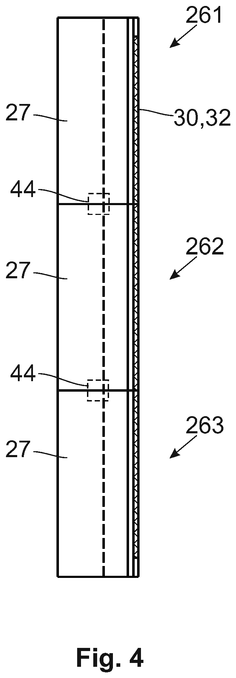

Figur 4 zeigt eine Seitenansicht von drei Abdichtelementen 261, 262, 263, welche mittels einer Kopplungseinrichtung miteinander verbunden sind. Während die Gesamtlänge der drei miteinander verbundenen Abdichtelemente gleich ist mit dem in den Figuren 2A und 2B dargestellten Abdichtelement 26, sind die Längen der einzelnen Abdichtelemente 261, 262, 263 deutlich geringer, hier jeweils ein Drittel der Gesamtlänge des in den Figuren 2A und 2B dargestellten Abdichtelements 26. Die einzelnen Abdichtelemente 261, 262, 263 müssen aber nicht gleich lang sein. Durch eine entsprechende Kombination mit längeren oder kürzeren Abdichtelementen 261, 262, 263 (nicht gezeigt), kann die Gesamtlänge des so entstehenden Abdichtelements 26 modulartig auf die Bedürfnisse des jeweiligen Anwendungsfalls angepasst werden.

Auch können die Hohlräume 28 der Abdichtelemente 261, 262, 263 unterschiedlich dimensioniert sein, um beispielsweise eine unterschiedliche Elastizität des betreffenden Abdichtelements 261, 262, 263 bereitzustellen. Auch der verwendete Schaumstoffkörper 27 als solcher kann härter oder weicher sein.

Die Kopplungseinrichtung 44 kann eine formschlüssige Verbindung bereitstellen, bei welchem ein Kopplungsvorsprung nach Art eines Puzzles in eine komplementär ausgebildeten Kopplungsausnehmung eingreift. Eine hakenförmige Gestaltung der Kopplungseinrichtung 44 ist auch denkbar. Zudem könnten Rastelemente und/oder Magnete zum Verbinden von zwei Abdichtelementen verwendet werden. Insofern kann die von der Kopplungseinrichtung 44 bereitgestellte Verbindung lösbar sein, so dass einzelne Abdichtelemente 261, 262, 263 ausgetauscht werden können, sofern diese stärker verschlissen sind als andere Abdichtelemente 261, 262, 263, ohne dass die gesamte Abdichtelement 26 ausgetauscht werden muss.

### Bezugszeichenliste

- 101, 102: Torabdichtung
- 12: Verladeöffnung
- 14: Wandung
- 16: Tor
- 18: Blech
- 20L, 20R, 200: Tragkörper

- 22, 22L, 22R, 220: Rahmen
- 24L, 24R, 240: Schürze
- 26, 26L, 26R, 260, 261, 262, 263: Abdichtelement
- 27: Schaumstoffkörper
- 28: Hohlraum
- 29: Schrägfläche

- 30: Verbindungselement
- 31: Öffnung
- 32: Holzplatte
- 34: Kunststoffschicht
- 36: Seil
- 38: Markierungsstreifen

- 40L, 40R: Puffer
- 42: Wölbung
- 44: Kopplungseinrichtung

## Patentansprüche

1. Torabdichtung (10) einer Verladeöffnung (12), welche von einer Wandung (14) gebildet wird, umfassend zumindest ein Abdichtelement (26, 26L, 26R), wobei das Abdichtelement (26, 26L, 26R)
- einen elastisch verformbaren Schaumstoffkörper (27), der mit einer Kunststoffschicht (34) ummantelt ist, und
- ein Verbindungselement (30) umfasst, mit welchem das Abdichtelement (26, 26L, 26R) mit einem angrenzenden Bauteil verbunden werden kann,
**dadurch gekennzeichnet, dass** die Torabdichtung (10) zumindest einen elastisch verformbaren Tragkörper (20L, 20R, 200) aufweist, welcher benachbart von der Verladeöffnung (12) mit der Wandung (14) verbunden ist, wobei das Abdichtelement (26, 26L, 26R) unter Verwendung des Verbindungselements (30) mit dem Tragkörper (20L, 20R, 200) verbunden ist und der Tragkörper (20L, 20R, 200) aus einem mit Fasern verstärktem Gummi und/oder Kunststoff gebildeten Verbundmaterial hergestellt ist, wobei das Verbundmaterial sandwichartig aufgebaut ist und sich mindestens zwei die Gewebeschichten mit mindestens einer Gummi- und/oder Kunststoffschicht abwechseln.

2. Torabdichtung (10) nach Anspruch 1,
**dadurch gekennzeichnet, dass** die Torabdichtung (10) zumindest eine am der Wandung (14) abgewandten Ende angeordnete, elastisch verformbare Schürze (24L, 24R, 240) aufweist.

3. Torabdichtung (10) nach Anspruch 2,
**dadurch gekennzeichnet, dass** die Torabdichtung (10) einen Rahmen (22, 22L, 22R, 220) aufweist, welcher am der Wandung (14) abgewandten Ende des Tragkörpers (20L, 20R, 200) mit diesem verbunden ist und an welchem die Schürze (24L, 24R, 240) befestigt ist.

4. Torabdichtung (10) nach Anspruch 3,
**dadurch gekennzeichnet, dass**
- das Abdichtelement (26, 26L, 26R) derart am Tragkörper (20L, 20R, 200) verbunden ist, dass die Schrägfläche (29) oder die Wölbung zum Zentrum der Torabdichtung (10) zeigt und benachbart zum Rahmen (22, 22L, 22R, 220) angeordnet ist, und
- die Schürze (24L, 24R, 240) infolge der elastischen Verformung mit dem Abdichtelement (26, 26L, 26R) und insbesondere mit der Schrägfläche (29) oder mit der Wölbung in Kontakt tritt.

5. Torabdichtung (10) nach einem der vorherigen Ansprüche,
**dadurch gekennzeichnet, dass** die Torabdichtung (10)
- zwei vertikal verlaufende Rahmen (22L, 22R) und
- einen oberen Rahmen (220) umfasst, der horizontal verläuft und die zwei vertikal verlaufenden Rahmen (22L, 22R) miteinander verbindet.

6. Torabdichtung (10) nach einem der vorherigen Ansprüche,
**dadurch gekennzeichnet, dass** das Verbindungselement (30) eine Holzplatte (32), insbesondere aus Pappelholz, umfasst.

7. Torabdichtung (10) nach einem der vorherigen Ansprüche,
**dadurch gekennzeichnet, dass** der Schaumstoffkörper (27) zumindest einen Hohlraum (28) umfasst.

8. Torabdichtung (10) nach einem der vorherigen Ansprüche,
**dadurch gekennzeichnet, dass** das Abdichtelement (26, 26L, 26R) einen im Wesentlichen rechteckigen Querschnitt mit einer Schrägfläche (29) oder einer Wölbung aufweist.

9. Torabdichtung (10) nach einem der vorherigen Ansprüche,
**dadurch gekennzeichnet, dass** das Abdichtelement (26, 26L, 26R) eine zumindest Kopplungseinrichtung (44) aufweist, mit welchem ein Abdichtelement (26, 26L, 26R) mit einem weiteren Abdichtelement (26, 26L, 26R) verbindbar ist.
